# EUROPEAN PATENT SPECIFICATION

(11) **EP 3 664 552 B1**
(45) Date of publication and mention of the grant of the patent: **27.09.2023**
(21) Application number: 17920199.1
(22) Date of filing: 31.07.2017
(51) Int. Cl.: H04W 72/12, H04W 72/04

(54) **TERMINAL, RADIO COMMUNICATION METHOD, BASE STATION AND SYSTEM**
ENDGERÄT, FUNKKOMMUNIKATIONSVERFAHREN, BASISSTATION UND SYSTEM
TERMINAL, PROCÉDÉ DE COMMUNICATION RADIO, STATION DE BASE ET SYSTÈME

(43) Date of publication of application: 10.06.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/027773
(87) International publication number: WO 2019/026158

(56) References cited:
- JP-A- 2014 222 896
- TSG-RAN WG1: "LS on NR UL SPS / UL transmission without UL grant", 3GPP DRAFT; R2-1707618_R1-1711686, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 30 July 2017 (2017-07-30), XP051311647, Retrieved from the Internet: URL:http://www.3gpp.org/ftp/tsg_ran/WG2_RL 2/TSGR2_99/LSin/ [retrieved on 2017-07-30]
- VIVO: "UL grant-free resource configuration", 3GPP DRAFT; R2-1707063 UL GRANT-FREE RESOURCE CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051301559, Retrieved from the Internet: URL:http://www.3gpp.org/ftp/Meetings_3GPP_ SYNC/RAN2/Docs/ [retrieved on 2017-06-26]
- NTT DOCOMO ET AL: "Overall solutions for UL grant free transmission", 3GPP DRAFT; R1-1711111, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051300311, Retrieved from the Internet: URL:http://www.3gpp.org/ftp/Meetings_3GPP_ SYNC/RAN1/Docs/ [retrieved on 2017-06-26]
- "Uplink Grant Free Transmission for URLLC", 3GPP TSG-RAN WG1 Meeting #89 Rl-1709126, 19 May 2017 (2017-05-19), XP051263436, Retrieved from the Internet: URL:http://3gpp.org/ftp/tsg - ran/ WG1RL1/TSGR189/Docs/R1-1709126.zip
- HUAWEI et al.: "Grant-free transmission for UL URLLC", 3GPP TSG-RAN WG1 Meeting #89 R1- 1706919, 19 May 2017 (2017-05-19), XP051261576, Retrieved from the Internet: URL:http:// 3gpp.org/ftp/tsg_ran/WG1_RL1/TSGR1_89/Docs /R1- 1706919.zip
- ERICSSON: "On UL SPS Transmission", 3GPP TSG-RAN WG1 Meeting #89 Rl-1709098, 19 May 2017 (2017-05-19), XP051263363, Retrieved from the Internet: URL:http://3gpp.org/ftp/tsg - ran/ WG1_RL1/TSGR1_89/Docs/R1-1709098.zip
- LENOVO et al.: "Discussion of precedures for UL transmission with and without grant", 3GPP TSG-RAN WG1 Meeting #89 R1-1707766, 19 May 2017 (2017-05-19), XP051262064, Retrieved from the Internet: URL:http://3gpp.org/ ftp/tsg_ran/WG1_RL1/TSGR1_89/Docs/R1-17077 66. zip
- "WF On procedures of grant-free transmission", 3GPP TSG-RAN WG1 Meeting #89 R1-1709537, 19 May 2017 (2017-05-19), XP051285189, Retrieved from the Internet: URL:http://3gpp.org/ftp/tsg - ran/WG1 - RL1/ TSGR1_89/Docs/R1-1709537.zip

## Description

### Technical Field

The present invention relates to a terminal, a radio communication method, a base station and a system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (also referred to as LTE Rel. 8 or 9), LTE-Advanced (LTE-A or LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

Legacy LTE systems (e.g., LTE Rel. 8 to 13) perform communication on Downlink (DL) and/or Uplink (UL) by using a subframe (also referred to as a TTI: Transmission Time Interval) of 1 ms. This subframe is a transmission time unit of 1 channel-coded data packet, and is a processing unit of scheduling, link adaptation or retransmission control (HARQ: Hybrid Automatic Repeat reQuest).

Furthermore, a radio base station (e.g., eNode B (eNB)) controls data allocation (scheduling) for a user terminal (UE: User Equipment), and notifies the UE of a data scheduling instruction by using Downlink Control Information (DCI). For example, when receiving DCI (also referred to as a UL grant) for instructing UL transmission, the UE that complies with legacy LTE (e.g., LTE Rel. 8 to 13) transmits UL data in a subframe that comes a given duration after (e.g., after 4 ms).
"LS on NR UL SPS I UL transmission without UL grant" (TSG-RAN WG1, 3GPP DRAFT; R2-1707618 _R1-1711686) describes that, at that time, two different types of UL transmission without grant have been agreed to be specified in RANI according to the following agreements. Type 1 is different from type 2 at least on the point that any L1 signalling is not required, and type 2 has some similarity with LTE UL SPS at least on the point that L1 signalling is used for activation/deactivation. RAN1 also agree for both types to support HARQ operations with repetitions, while further study is needed whether to configure multiple resources, and also to decide a timing reference for type 2.
"UL grant-free resource configuration" (Vivo, 3GPP DRAFT R2-1707063) describes the authors' view on the configuration for UL grant-free transmission.
"Overall solutions for UL grant free transmission" (NTT DOCOMO, INC., 3GPP DRAFT R1-1711111) describes the authors' views on the relation between SPS UL transmission and UL grant-free transmission, overall solutions for UL grant-free transmission including configurations, procedures and the usage of L1 signalling.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is assumed that future radio communication systems (e.g., NR) control scheduling of data by using a configuration different from those of legacy LTE systems. For example, it has been studied to realize communication latency reduction to provide communication service (e.g., Ultra Reliable and Low Latency Communications (URLLC)) that is requested to realize low latency and high reliability.

More specifically, to shorten a delay time until transmission of UL data is started, it has been studied to permit collision of UL transmission of a plurality of UEs and perform communication. For example, transmission of UL data from a UE without a physical layer UL grant from a radio base station (this is also referred to as UL grant-free transmission, UL grant-less transmission, contention-based UL transmission or UL Semi-persistent Scheduling (SPS) transmission) has been studied.

However, how the user terminal performs control when performing UL grant-free transmission (e.g., how the user terminal determines a transmission timing at which transmission is possible) is not yet determined, and a method for appropriately controlling UL grant-free transmission is demanded.

It is therefore one of objects of the present invention to provide a user terminal and a radio communication method that can appropriately control UL grant-free transmission.

### Solution to Problem

According to an aspect of the present invention, there is provided a terminal as set out in Claim 1.

According to another aspect of the present invention, there is provided a radio communication method as set out in Claim 4.

According to another aspect of the present invention, there is provided a base station as set out in Claim 5.

According to another aspect of the present invention, there is provided a system as set out in Claim 6.

### Advantageous Effects of Invention

According to the present invention, it is possible to appropriately control UL grant-free transmission.

### Brief Description of Drawings

Fig. 1A is a diagram for explaining UL grant-based transmission, and Fig. 1B is a diagram for explaining UL grant-free transmission.
Fig. 2 is a diagram illustrating one example of resources used for UL grant-free transmission.
Figs. 3A and 3B are diagrams illustrating one example of UL grant-free transmission according to one embodiment of the present invention.
Figs. 4A and 4B are diagrams illustrating another example of UL grant-free transmission according to one embodiment of the present invention.
Figs. 5A and 5B are diagrams illustrating another example of UL grant-free transmission according to one embodiment of the present invention.
Fig. 6 is a diagram illustrating another example of UL grant-free transmission according to one embodiment of the present invention.
Fig. 7 is a diagram illustrating one example of a schematic configuration of a radio communication system according to one embodiment of the present invention.
Fig. 8 is a diagram illustrating one example of an overall configuration of a radio base station according to the one embodiment of the present invention.
Fig. 9 is a diagram illustrating one example of a function configuration of the radio base station according to the one embodiment of the present invention.
Fig. 10 is a diagram illustrating one example of an overall configuration of a user terminal according to the one embodiment of the present invention.
Fig. 11 is a diagram illustrating one example of a function configuration of the user terminal according to the one embodiment of the present invention.
Fig. 12 is a diagram illustrating one example of hardware configurations of the radio base station and the user terminal according to the one embodiment of the present invention.

### Description of Embodiments

A user terminal described herein includes: a transmission section that performs UL grant-free transmission for transmitting UL data without a UL transmission instruction from a radio base station; and a control section that controls the UL grant-free transmission based on a periodicity of a UL grant-free transmission resource notified by a higher layer signaling, and a physical layer signaling for notifying activation of the UL grant-free transmission, and the control section determines a start position of the UL grant-free transmission resource to which a given periodicity is applied based on offset information included in the physical layer signaling.

It has been studied for future radio communication systems (e.g., LTE Rel. 14, 15 and subsequent releases, 5G and NR that will be also referred to as NR below) to apply UL grant-free transmission for transmitting UL data without a UL grant since UL grant-based transmission for transmitting UL data based on a UL grant is not sufficient to realize low latency communication.

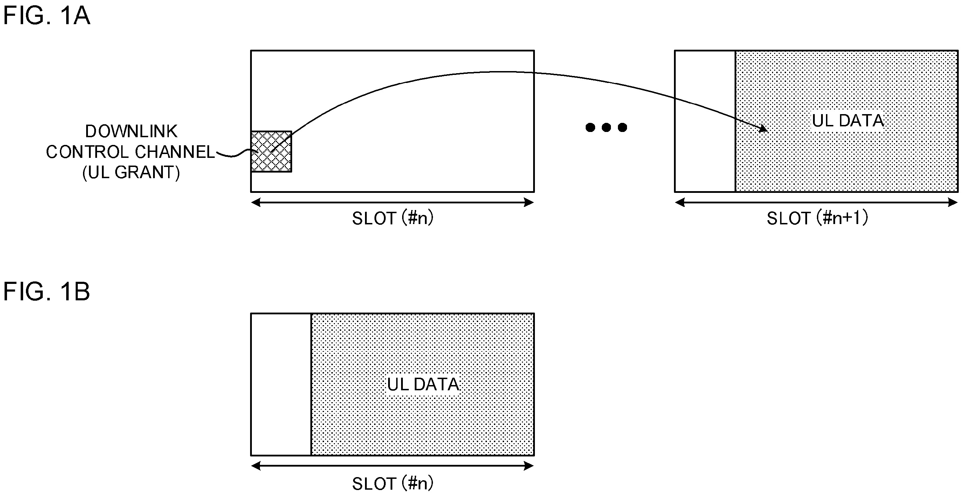

Hereinafter, UL grant-based transmission and UL grant-free transmission will be described. Fig. 1A is a diagram for explaining UL grant-based transmission, and Fig. 1B is a diagram for explaining UL grant-free transmission.

According to UL grant-based transmission, as illustrated in Fig. 1A, a radio base station (that may be referred to as, for example, a Base Station (BS), a Transmission/Reception Point (TRP), an eNode B (eNB) and a gNB) transmits a downlink control channel (UL grant) for instructing allocation of UL data (PUSCH: Physical Uplink Shared Channel), and a UE transmits UL data according to the UL grant (after a given timing after receiving the UL grant).

On the other hand, according to UL grant-free transmission, as illustrated in Fig. 1B, the UE transmits UL data without receiving a UL grant for scheduling data.

Furthermore, it has been studied for UL grant-free transmission to repeatedly transmit UL data. According to repeated transmission of the UL data, the UE is assumed to repeatedly transmit the UL data a given number of (e.g., K) times in a Transport Block (TB) unit. For example, until the UE transmits/receives downlink control information (UL grant) for instructing retransmission of the UL data or downlink control information (ACK) for notifying a success of decoding of the UL data, or until the number of times of repeated transmission reaches the given number of times, the UE repeatedly transmits the TB matching the UL data. The repetition may mean repeated transmission of the same Redundancy Version (RV) for the TB or may transmit the RV while changing the RV per repetition.

By the way, it has been studied for NR to support at least a semi-static configuration/reconfiguration of a resource domain to which UL data to be transmitted by UL grant-free is allocated. It has been studied that a resource configuration includes at least physical resources in time and/or frequency domains.

For example, it is has been studied that a resource used for UL grant-free transmission is configured by a higher layer signaling such as UL Semi Persistent Scheduling (SPS) used by legacy LTE (e.g., LTE Rel. 8 to 13).

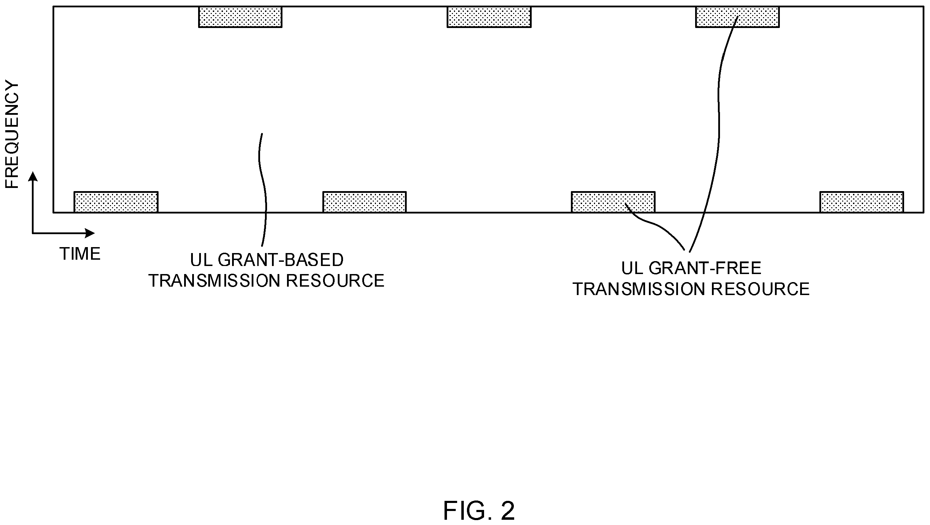

Fig. 2 is a diagram illustrating one example of resources used for UL grant-free transmission. As illustrated in Fig. 2, frequency resources used for UL grant-free transmission may be applied inter-TTI frequency hopping (e.g., different frequency resources are configured to different symbols in a slot), or intra-TTI frequency hopping (e.g., different frequency resources are configured between slots). Furthermore, time resources used for UL grant-free transmission may be temporarily contiguously configured or may be temporarily non-contiguously (discontinuously) configured. In addition, resources other than at least the resources used for UL grant-free transmission may be used for UL grant-based transmission.

Thus, the future radio communication systems are assumed to support UL grant-free transmission. However, how to perform control to perform the UL grant-free transmission is not yet determined. For example, the UE is considered to start UL grant-free transmission based on an instruction (e.g., an instruction for activation of UL grant-free transmission) from a base station. However, a problem is how to determine a start timing at which transmission is possible.

Hence, the inventors of this application have focused upon that information for instructing activation of UL grant-free transmission is transmitted before the UL grant-free transmission is started, and conceived including, in this information, information of the start timing at which transmission is possible to notify the UE.

More specifically, according to one aspect of the present invention, a first UL grant-free transmission resource to which a given periodicity is applied is determined based on offset information included in a physical layer signaling for notifying activation of UL grant-free transmission. According to this configuration, it is possible to flexibly instruct UL grant-free transmission, and the UE side can appropriately determine the start timing (UL grant-free resource) at which transmission is possible.

An embodiment according to the present invention will be described in detail below with reference to the drawings. In the following description, methods that transmit UL data without applying a UL grant are applicable. A radio communication method according to each embodiment may be each applied alone or may be applied in combination.

In addition, in the following embodiment, any signal and channel may be assigned a prefix "NR-" that indicates usage for NR and read. Furthermore, parameters (that may be referred to as radio parameters or configuration information) used for UL grant-free transmission may be referred to as UL grant-free transmission parameters. In addition, the "parameters" may mean a "parameter set" that indicates one or a plurality of parameter sets.

### (First Aspect)

The first aspect will describe a case where a start timing (e.g., a UL grant-free transmission resource to which a given periodicity is applied) at which UL grant-free (UL GF) transmission is possible is determined based on offset information included in a physical layer signaling.

First, the UL grant-free transmission parameters are semi-statically configured to a UE by a base station (gNB) by a higher layer signaling (e.g., a Radio resource Control (RRC) signaling, broadcast information (a Master Information Block (MIB) or a System Information Block (SIB)) or a Medium Access Control (MAC) signaling).

The UL grant-free transmission parameters include information related to resources (also referred to as UL GF resources) used for UL grant-free transmission, and information related to frequency and/or time resources, a Modulation and Coding Scheme (MCS), a reference signal parameter, the number of times of repetition (K) of UL grant-free transmission, and a power control parameter.

Information related to the UL GF resource includes information of a periodicity configured to the UL GF resources. The periodicity of the UL GF resources may be commonly configured to a plurality of UEs (e.g., all UEs or a given group of UEs) or may be individually configured per UE. Furthermore, the information related to the UL GF resources may include an index (e.g., a Physical Resource Block (PRB) index, a cell index, a slot index, a subframe index or a symbol index) related to the UL GF resources to be configured. In addition, when repeated transmission is applied, information of one resource (in a case where the resource is commonly applied to repeated transmission) or a plurality of resources (in a case where a different resource is applied per repeated transmission) may be notified.

In addition, part of parameters (e.g., a power ramping related parameter, RV cycling (changing) and MCS adjustment) may be configured only for a given number of times of repeated transmission or may be configured for a time between repeated transmission. For example, power ramping may be applied to a time during repeated transmission, the same transmission power may be applied to a time during repeated transmission, and power ramping may be applied to the time between repeated transmission.

Furthermore, a higher layer signaling for configuring the UL grant-free transmission parameters may be a UE-common signaling or may be a UE-specific signaling.

Consequently, the UE can learn, for example, the UL GF resources based on the information configured by the higher layer signaling. In addition, at least part of the above UL grant-free transmission parameters may be defined by a specification.

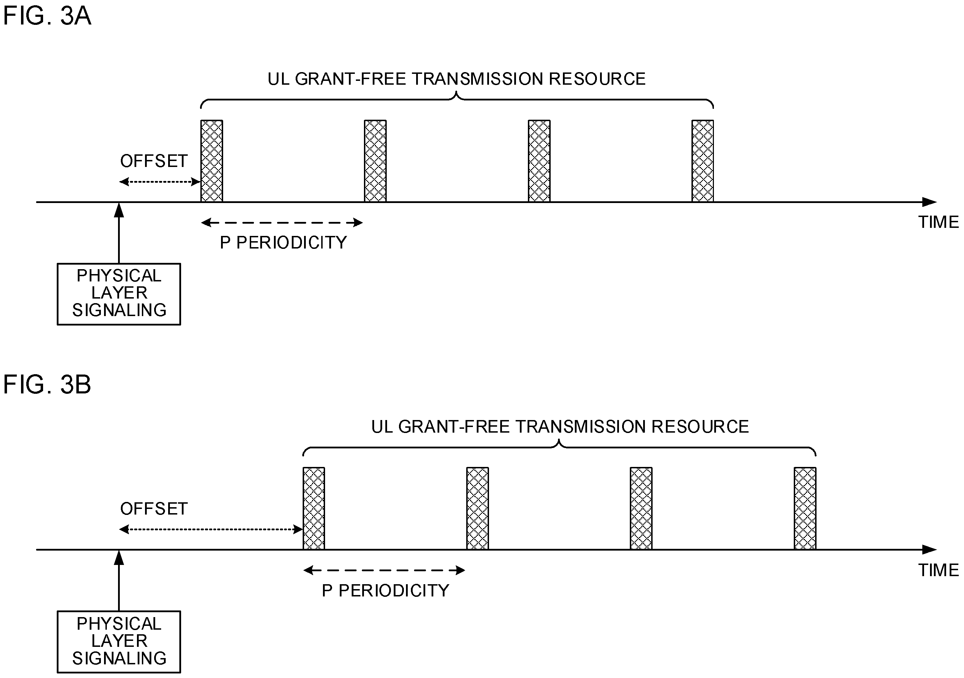

When performing UL grant-free transmission, the UE determines a timing (e.g., start timing) at which the UL GF resources configured by, for example, the higher layer signaling are configured based on time offset information included in a physical layer signaling (L1 signaling) (see Fig. 3). The physical layer signaling may be downlink control information corresponding to a UL grant or a DL assignment, or other control information.

In Fig. 3, the UE determines a timing at which the UL GF resources to which a given periodicity (P in this case) is applied are arranged based on offset information included in a physical layer signaling. More specifically, based on the offset information, the UE determines the first UL GF resource (the first UL GF resource in which is available for UL grant-free transmission) of the UL GF resources to which the given periodicity is applied. The given periodicity (P) is notified in advance to the UE by using, for example, a higher layer signaling. For example, the UE performs UL grant-free transmission from a timing indicated by the offset information included in the physical layer signaling assuming that the UL GF resources to which the given periodicity (P) is applied are configured. In this regard, Figs. 3A and 3B illustrate cases where different pieces of time offset information are notified by a physical layer signaling.

As the physical layer signaling for notifying the time offset information, a physical layer signaling for notifying activation (that may be referred to activating, activate or start) of UL grant-free transmission only needs to be used. Consequently, the UE can concurrently recognize start of the UL grant-free transmission and a start position of the UL GF resource configured to the given periodicity.

Furthermore, the base station may include the time offset information in the physical layer signaling for notifying the UL grant-free transmission parameters to notify the UE. The physical layer signaling for notifying the UL grant-free transmission parameters may be the same parameters (e.g., a periodicity of the UL GF resources and/or a frequency allocation domain) as transmission parameters notified by a higher layer signaling. In this case, the UE that has received the parameters notified by the physical layer signaling may override, update, adjust or modify a radio parameter configured by the higher layer signaling, and control UL grant-free transmission.

Thus, by including the time offset information in the physical layer signaling for notifying the UL grant-free transmission parameters, the UE can concurrently recognize parameter change of UL grant-free transmission, and a start position of the UL GF resources configured to the given periodicity. In addition, the UL grant-free transmission parameters notified by the physical layer signaling may be configured to include information for activating UL grant-free transmission.

### <Time Offset Information>

The time offset information notified by the physical layer signaling only needs to be information for notifying an interval from a given timing to a time at which the UL GF resource (e.g., the UL GF resource configured first among the UL GF resources to which the given periodicity (P) is applied) becomes available first. The given timing may be a reception timing of the physical layer signaling or may be a given reference timing that serves as a reference. Configurations (aspects 1 to 4) that are applicable to the time offset information and the given timing will be described below. In addition, one of the following aspects 1 to 4 may be defined in advance by the specification, or the base station may notify the UE of the aspect to be applied.

### (Aspect 1)

According to the aspect 1, the time offset is indicated by a symbol unit, and the given timing is the reception timing of the physical layer signaling (see Fig. 3). In this case, the time offset information is used to notify the UE of the number of symbols from the reception timing (e.g., a received symbol) of the physical layer signaling to a start symbol of the UL GF resource to which the given periodicity is applied. In addition, the symbol for determining the given timing can be defined by a symbol length that is defined by a subcarrier-spacing used when UL GF transmission is performed. Alternatively, the symbol for determining the given timing may be defined by a symbol length that is defined by a subcarrier-spacing used to receive the physical layer signaling.

The aspect 1 is suitably applicable to a case (e.g., Fig. 3A) where a duration (offset) from the timing of the physical layer signaling for instructing activation of UL grant-free transmission to the start timing of the firstly configured UL GF resource is short. When, for example, a notification timing of the physical layer signaling and the start timing of the UL GF resource are in the same time unit (e.g., slot), it is possible to reduce an information amount that is necessary to notify the time offset by applying the aspect 1.

### (Aspect 2)

According to the aspect 2, the time offset is indicated by a combination of a symbol and a slot, and the given timing is the reception timing of the physical layer signaling (see Fig. 3). In this case, the time offset information is used to notify the UE of the number of slots + the number of symbols from the reception timing (e.g., a received symbol) of the physical layer signaling to the start symbol of the UL GF resource to which the given periodicity is applied. In addition, the symbol and the slot for determining the given timing can be defined by a symbol length that is defined by a subcarrier-spacing used when UL GF transmission is performed, and a slot that is defined by this symbol length. Alternatively, the symbol and the slot for determining the given timing may be defined by a symbol length that is defined by a subcarrier-spacing used to receive the physical layer signaling, and a slot that is defined by this symbol length.

The aspect 2 is suitably applicable to a case (e.g., Fig. 3B) where a duration (offset) from the timing of the physical layer signaling for instructing activation of UL grant-free transmission to the start timing of the firstly configured UL GF resource is long. When, for example, the notification timing of the physical layer signaling and the start timing of the UL GF resource are in different time unit (e.g., slots that are a given number of slots apart), it is possible to reduce the information amount that is necessary to notify the time offset by applying the aspect 2.

### (Aspect 3)

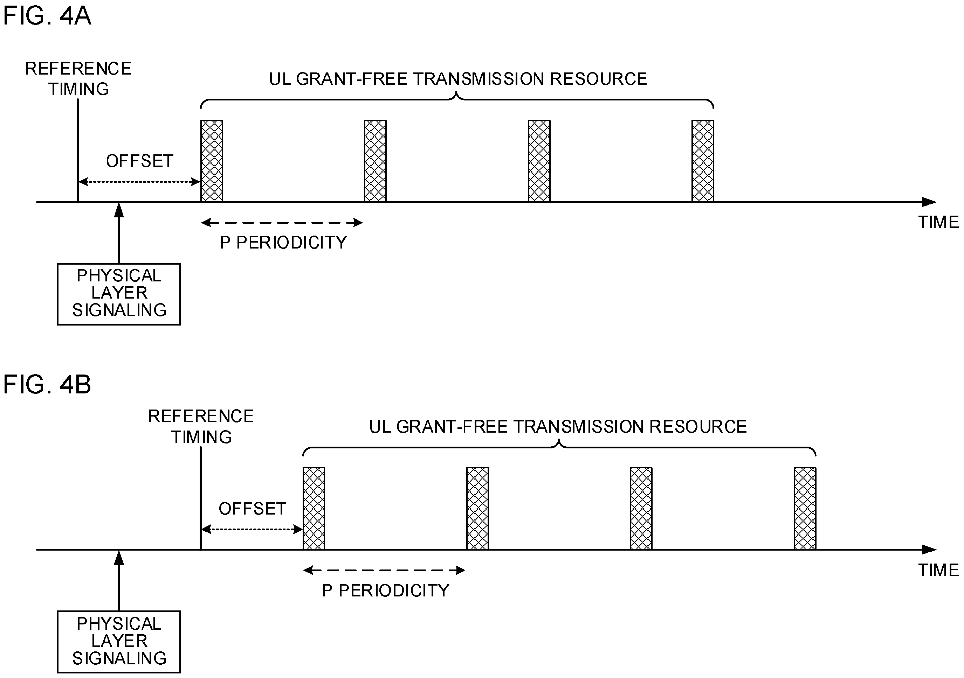

According to the aspect 3, the time offset is indicated by a symbol unit, and the given timing is a given reference timing (see Fig. 4). In this case, the time offset information is used to notify the UE of the number of symbols from the given reference timing to the start symbol of the UL GF resources to which the given periodicity is applied.

The given reference timing may be a radio frame start timing, start timings of a subframe and/or a slot in which the physical layer signaling is received, or start timings of a specific subframe and/or a specific slot. In addition, the reference timing may be configured to come before the physical layer signaling (see Fig. 4A) or may be configured to come after the physical layer signaling (see Fig. 4B).

When the notification timing of the physical layer signaling and the start timing of the UL GF resource are in the same time unit (e.g., slot), the reference timing is preferably configured to come before the notification timing of the physical layer signaling.

On the other hand, when the notification timing of the physical layer signaling and the start timing of the UL GF resource are in different slots, the reference timing may be configured to come after the notification timing of the physical layer signaling. In this case, a duration from the reference timing to the UL GF resource becomes short, so that it is possible to reduce the information amount that is necessary to notify the offset information.

The aspect 3 is suitably applicable to a case where the duration (offset) from the given reference timing to the start timing of the firstly configured UL GF resource is short. When, for example, the given reference timing and the start timing of the UL GF resource are in the same time unit (e.g., slot), it is possible to reduce the information amount that is necessary to notify the time offset by applying the aspect 3. Furthermore, even when a physical layer signaling is transmitted and received at different timings between user terminals to which the same UL GF resource timing and/or periodicity are configured by using the reference timing instead of the notification timing of the physical layer signaling, an offset value instructed by the physical layer signaling can take a common value, so that it is possible to easily control scheduling.

### (Aspect 4)

According to the aspect 4, the time offset is indicated by a combination of a symbol and a slot, and the given timing is a given reference timing (see Fig. 4). In this case, the time offset information is used to notify the UE of the number of slots + the number of symbols from the given reference timing to the start symbol of the UL GF resource to which the given periodicity is applied.

The aspect 4 is suitably applicable to a case where a duration (offset) from the given reference timing to the start timing of the firstly configured UL GF resource is long. When, for example, the given reference timing and the start timing of the UL GF resource are in different slots (e.g., slots that are a given number of slots or more apart), it is possible to reduce the information amount that is necessary to notify the time offset by applying the aspect 4. Furthermore, even when a physical layer signaling is transmitted and received at different timings between user terminals to which the same UL GF resource timing and/or periodicity are configured by using the reference timing instead of the notification timing of the physical layer signaling, an offset value instructed by the physical layer signaling can take a common value, so that it is possible to easily control scheduling.

Thus, by including the offset information in at least the physical layer signaling for activating UL grant-free transmission to notify the UE, the UE can appropriately determine the start timing of the UL GF resource (firstly configured UL GF resource). Consequently, it is possible to learn a timing of the UL GF resources configured to the given periodicity (P) notified by, for example, a higher layer signaling, and appropriately perform UL grant-free transmission. Furthermore, by semi-statically notifying the periodicity configured to the UL GF resources by the higher layer signaling and dynamically notifying a start position by the physical layer signaling, it is possible to flexibly configure the UL GF resources per UE.

### (Second Aspect)

As described above, it is also considered for UL grant-free transmission to repeatedly transmit UL data. According to the repeated transmission of the UL data, a UE repeatedly transmits the UL data a given number of times (e.g., K) in a Transport Block (TB) unit. When UL grant-free transmission (or UL GF resources) is configured to a given periodicity, a problem is how to configure repeated transmission of UL data to which UL grant-free transmission is applied. Hence, the second aspect will describe a case where UL GF resources configured per given periodicity are used to perform repeated transmission.

The repeated transmission of the UL data includes a case (case 1) where repeated transmission is performed within a range of each given periodicity (P), and a case (case 2) where UL grant-free transmission resources configured per given periodicity are respectively used to perform repeated transmission. That is, repeated transmission is performed per given periodicity in the case 1, and one-time repeated transmission is performed over a plurality of periodicities (e.g., K × P) in the case 2. The case 1 and the case 2 will be described in detail below.

### <Case 1>

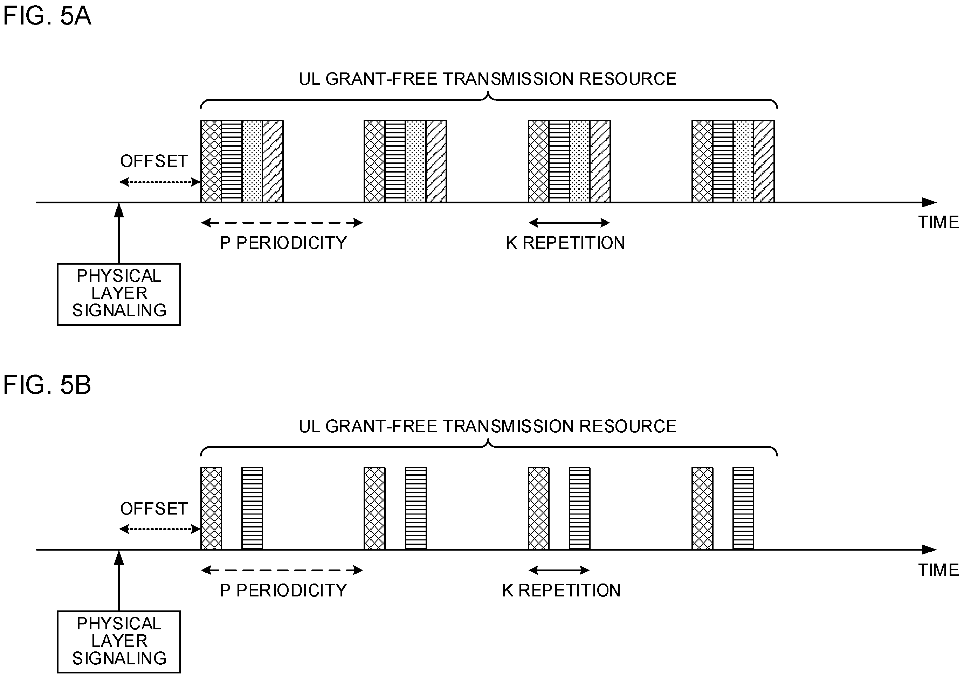

Fig. 5A illustrates one example of a case where repeated transmission is performed within a range of each given periodicity (P). In Fig. 5A, a plurality of UL GF resources contiguously configured per given periodicity are used to perform repeated transmission. The number of times (K) to apply repeated transmission only needs to be notified in advance from a base station to the UE by using, for example, a higher layer signaling.

Furthermore, when a plurality of UL GF resources configured to contiguous time domains (e.g., symbols or slots) are used to perform repeated transmission, a plurality of UL GF resources may be configured to the same domain (e.g., same frequency domain) or may be configured to different frequency domains. Information related to the domain (e.g., frequency domain) of the UL GF resources only needs to be notified to the UE by using, for example, a higher layer signaling.

For example, a case where a common domain (e.g., frequency domain) is applied to a plurality of UL GF resources will be assumed. The UE receives information (e.g., one UL GF resource) related to the domain of the UL GF resources notified from the base station, and information related to a periodicity configured to the UL GF resources. The UE determines a timing of the first UL GF resource of repeated transmission based on a time offset notified by a physical layer signaling.

In this case, the UE performs repeated transmission by using the same UL GF resource a given number of times (K) from the timing of the first UL GF resource. Subsequently, the UE performs repeated transmission per given periodicity. Consequently, even when repeated transmission is performed per given periodicity, the UE can appropriately learn a start position of the UL GF resource.

Next, a case where different domains (e.g., frequency domains) are applied to a plurality of UL GF resources will be assumed. The UE receives information (e.g., a plurality of UL GF resources) related to the domains of the UL GF resources notified from the base station, and information related to a periodicity configured to the UL GF resources. In this case, an arrangement order of a plurality of UL GF resources used for repeated transmission may be notified to the UE. Alternatively, the arrangement order of a plurality of UL GF resources may be defined based on a given condition (e.g., PRB index). Consequently, the UE can learn the UL GF resources used for repeated transmission.

In addition, whether to configure the common domain or configure the different domains to a plurality of UL GF resources may be able to be configured by, for example, a higher layer signaling. In addition, at least one of an MCS, transmission power and the number of MIMO layers can be configured differently by a plurality of UL GF resources.

The UE determines the timing of the first UL GF resources for repeated transmission based on a time offset notified by a physical layer signaling. In this case, the UE performs repeated transmission by using different UL GF resources the given number of times (K) from the timing of the first UL GF resource.

In addition, each time offset may be configured to each UL GF resource used for each repeated transmission, and notified to the UE. Consequently, the UE can learn each UL GF resource used for repeated transmission, and a timing of each UL GF resource.

### [Modified Example]

Fig. 5A illustrates a case where contiguous time units (e.g., symbols) are used for repeated transmission, yet are not limited to this. For example, UL GF resources are configured to non-contiguous time domains within a range of the given periodicity (P) to perform repeated transmission (see Fig. 5B). There may be employed a configuration where the non-contiguous time domains are configured per given periodicity.

In this case, a configuration (e.g., frequency domain) of the UL GF resources respectively configured to the non-contiguous time domains (e.g., symbols) may be the same or may be different within the range of the given periodicity (P). When the different UL GF resources are configured, K UL GF resources only need to be notified to the UE. In this case, information related to each UL GF resource only needs to be notified by using a higher layer signaling.

For example, the base station notifies the UE of each of the frequency domain and/or the periodicity of each UL GF resource. In this case, the configurations (e.g., frequency domains) of a plurality of UL GF resources are notified to the UE, and one periodicity of a plurality of UL GF resources may be notified to the UE. Furthermore, the arrangement order of a plurality of UL GF resources may be notified by the higher layer signaling. Alternatively, a configuration (e.g., frequency domain) of each UL GF resource may be notified by the higher layer signaling, and a time domain (e.g., start timing) may be notified to the UE by using time offset information of the physical layer signaling.

### <Case 2>

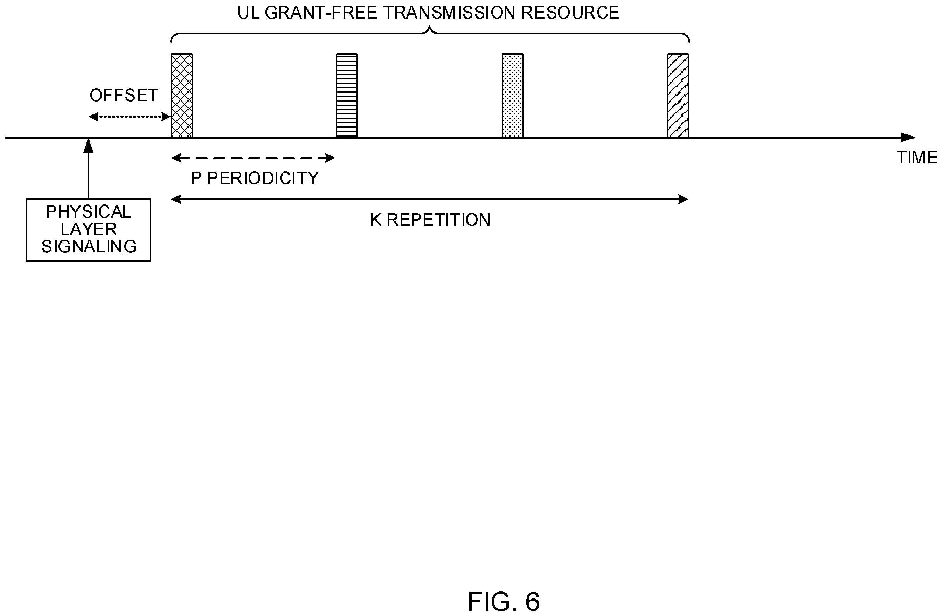

Fig. 6 illustrates one example of a case where each UL GF resource configured per given periodicity (P) is used to perform repeated transmission. That is, in the case 2, repeated transmission of UL data that is repeated the given number of times (K) is performed by using a duration of K×P.

Each UL GF resource configured per given periodicity (P) may be identical (e.g., same frequency domain) or different. A method for configuring each UL GF resource can be performed similar to the above case 1.

Thus, by performing repeated transmission by using each UL GF resource configured to each given periodicity (P), it is possible to efficiently use resources and realize highly reliable communication by way of repeated transmission when a requirement for latency is relatively lax.

In addition, which repeated transmission in the case 1 where repeated transmission is performed within the range of each given periodicity (P) or the case 2 where repeated transmission is performed by using each UL grant-free transmission resource configured per given periodicity is performed as repeated transmission of UL data may be configured to the user terminal by the base station by the higher layer signaling. For example, a UL GF configuration periodicity is P, and a UL GF repetition periodicity is Q. In this case, it is possible to realize the case 1 by making Q smaller than P. Furthermore, it is possible to realize the case 2 by making Q an integer multiple of P.

### (Radio Communication System)

The configuration of the radio communication system according to one embodiment of the present invention will be described below. This radio communication system uses one or a combination of the radio communication method according to each of the above embodiment of the present invention to perform communication.

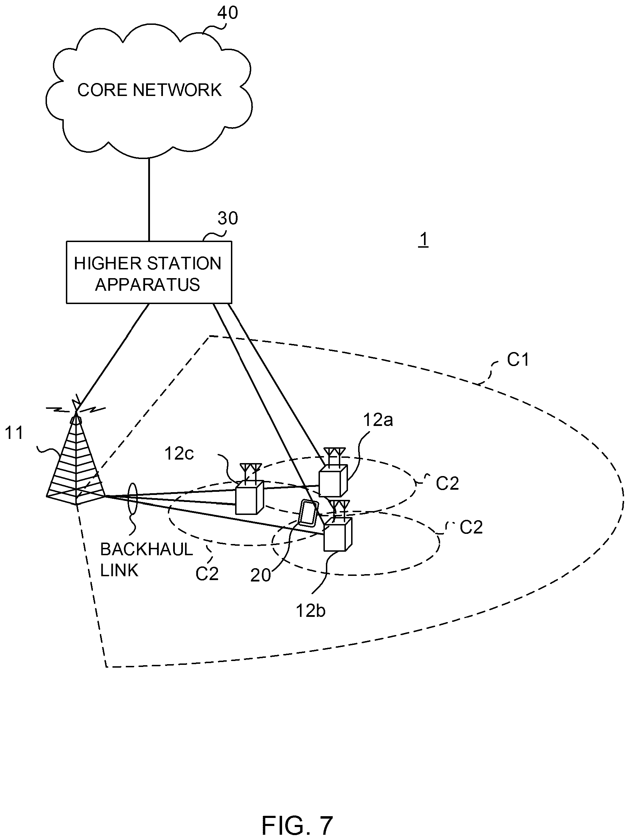

Fig. 7 is a diagram illustrating one example of a schematic configuration of the radio communication system according to the one embodiment of the present invention. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to those illustrated in Fig. 7.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or contiguous resource blocks per terminal and causes a plurality of terminals to use respectively different bands to reduce an inter-terminal interference. In this regard, uplink and downlink radio access schemes are not limited to a combination of these, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and System Information Blocks (SIBs) are conveyed on the PDSCH. Furthermore, Master Information Blocks (MIBs) are conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific Reference Signal). Furthermore, a reference signal to be conveyed is not limited to these.

### (Radio Base Station)

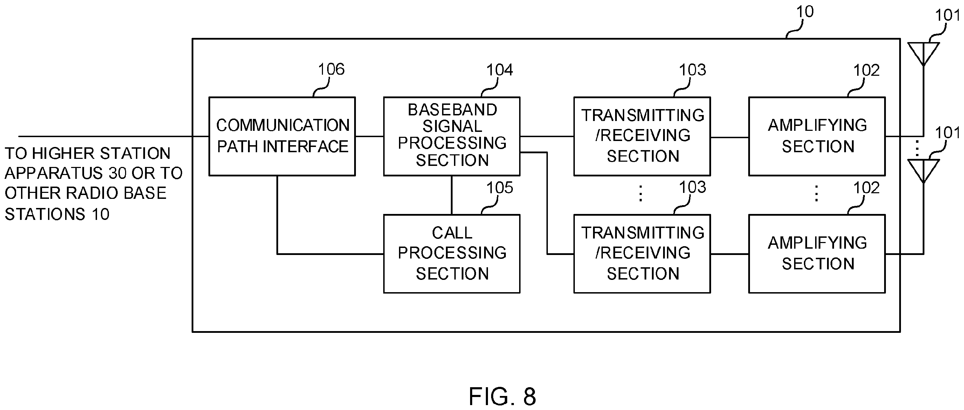

Fig. 8 is a diagram illustrating one example of an overall configuration of the radio base station according to the one embodiment of the present invention. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency band, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on user data included in the input uplink signal, and transfers the user data to the higher station apparatus 30 via the channel interface 106. The call processing section 105 performs call processing (such as configuration and release) of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

Each transmission/reception section 103 receives, from the user terminal 20, data transmitted by UL grant-free transmission for transmitting UL data without a UL transmission instruction (UL grant) from the radio base station 10. Furthermore, each transmission/reception section 103 receives the UL grant-free transmission repeatedly transmitted from the user terminal 20.

Furthermore, each transmission/reception section 103 transmits information related to UL grant-free transmission resources (e.g., a resource configuration periodicity, and allocation of frequency and/or time domains of the resources), and information related to repeated transmission (e.g., the number of times of repetition, and resources used for repeated transmission) by a higher layer signaling and/or a physical layer signaling. Furthermore, each transmission/reception section 103 includes offset information (e.g., time offset) in the physical layer signaling for notifying, for example, activation of UL grant-free transmission and/or parameter change to transmit.

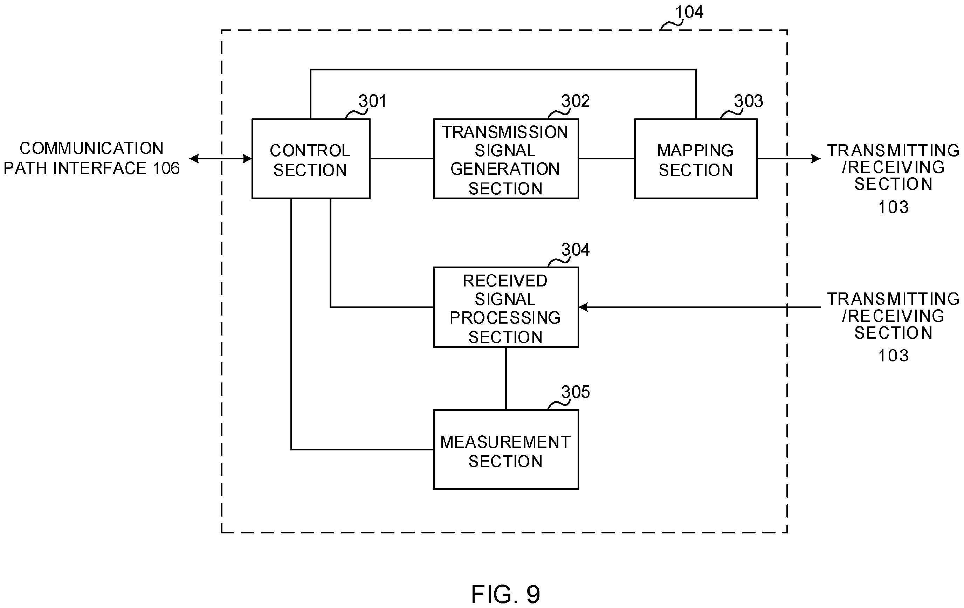

Fig. 9 is a diagram illustrating one example of a function configuration of the radio base station according to the one embodiment of the present invention. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present invention.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g. a signal transmitted on the PDSCH), and a downlink control signal (e.g., a signal that is transmitted on the PDCCH and/or the EPDCCH and is, for example, transmission acknowledgement information). Furthermore, the control section 301 controls generation of the downlink control signal and the downlink data signal based on a result obtained by deciding whether or not it is necessary to perform retransmission control on an uplink data signal. Furthermore, the control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

Furthermore, the control section 301 controls scheduling of an uplink data signal (e.g., a signal transmitted on the PUSCH), an uplink control signal (e.g., a signal that is transmitted on the PUCCH and/or the PUSCH and is, for example, transmission acknowledgement information), a random access preamble (e.g., a signal transmitted on the PRACH) and an uplink reference signal.

The control section 301 controls generation and notification by including in an L1 signaling the offset information (timing information) that is necessary for the user terminal 20 to control UL grant-free transmission. Furthermore, the control section 301 may control generation and notification by including information related to repeated transmission (the number of times of repetition) of UL grant-free transmission in the higher layer signaling and/or the physical layer signaling.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present invention.

The transmission signal generating section 302 generates, for example, a DL assignment for notifying downlink data allocation information, and/or a UL grant for notifying uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on a given radio resource based on the instruction from the control section 301, and outputs the downlink signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present invention.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### (User Terminal)

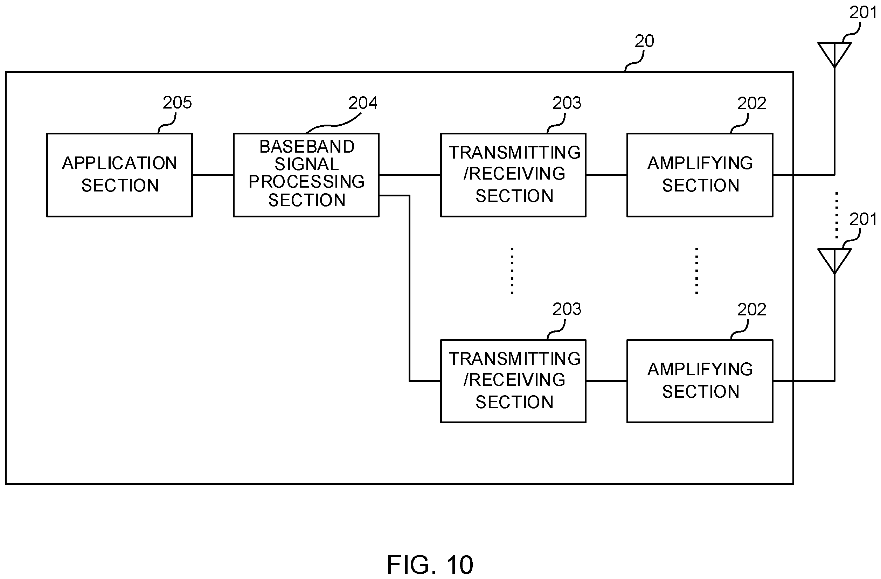

Fig. 10 is a diagram illustrating one example of an overall configuration of the user terminal according to the one embodiment of the present invention. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present invention. In this regard, the transmission/reception sections 203 may be composed as an integrated transmission/reception section or may be composed of transmission sections and reception sections.

The baseband signal processing section 204 performs FFT processing, error correcting decoding, and reception processing of retransmission control on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs transmission processing of retransmission control (e.g., HARQ transmission processing), channel coding, precoding, Discrete Fourier Transform (DFT) processing and IFFT processing on the uplink user data, and transfers the uplink user data to each transmission/reception section 203. Each transmission/reception section 203 converts the baseband signal output from the baseband signal processing section 204 into a radio frequency band, and transmits a radio frequency signal. The radio frequency signal subjected to the frequency conversion by each transmission/reception section 203 is amplified by each amplifying section 202, and is transmitted from each transmission/reception antenna 201.

Each transmission/reception section 203 performs UL grant-free transmission for transmitting UL data without the UL transmission instruction (UL grant) from the radio base station 10. Furthermore, each transmission/reception section 203 performs UL grant-free transmission to be repeatedly transmitted.

Furthermore, each transmission/reception section 203 receives the information related to the LTL grant-free transmission resources (e.g., the resource configuration periodicity, and allocation of the frequency and/or time domains of the resources), and the information related to repeated transmission (e.g., the number of times of repetition, and the resources used for repeated transmission) by the higher layer signaling and/or the physical layer signaling. Furthermore, each transmission/reception section 203 receives the offset information (e.g., time offset) by the physical layer signaling for notifying, for example, activation of UL grant-free transmission and/or parameter change.

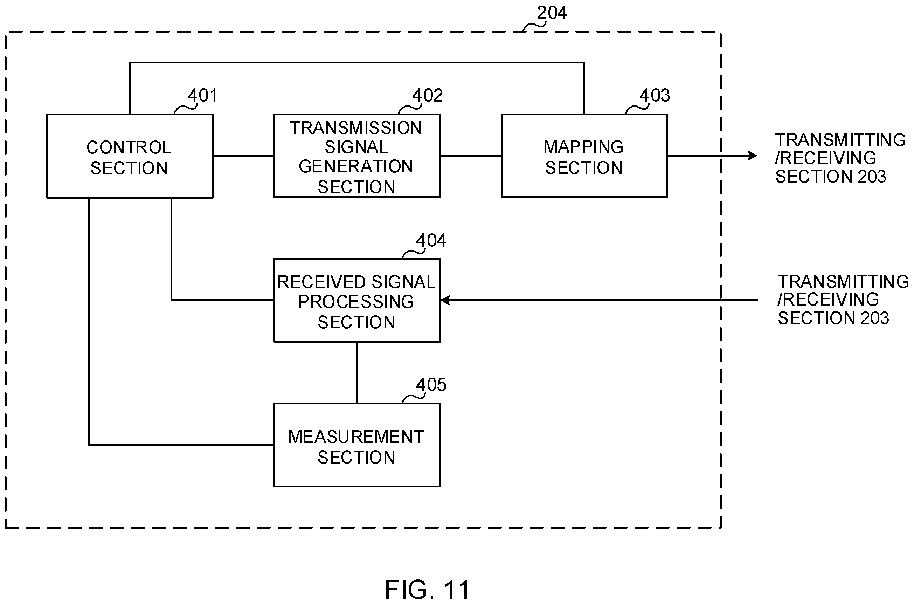

Fig. 11 is a diagram illustrating one example of a function configuration of the user terminal according to the one embodiment of the present invention. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present invention.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 may control UL grant-free transmission based on the periodicity of UL grant-free transmission resources notified by the higher layer signaling, and the physical layer signaling for notifying activation of UL grant-free transmission. For example, the control section 401 decides a configuration timing of, for example, a start position of the UL grant-free transmission resource (e.g., a first UL grant-free transmission resource) to which a given periodicity is applied based on the offset information included in the physical layer signaling.

The offset information may be information indicating an offset between the physical layer signaling and the head resource (the first resource configured to the given periodicity) of the UL grant-free transmission resources to which the given periodicity is applied. Alternatively, the offset information may be information indicating an offset between a given reference timing and the head resource (the first resource configured to the given periodicity) of the first UL grant-free transmission resources to which the given periodicity is applied.

Furthermore, when performing repeated transmission of UL grant-free transmission, the control section 401 performs control to repeatedly transmit UL data within a range of the given periodicity. Alternatively, the control section 401 controls repeated transmission of the UL data by using each UL grant-free transmission resource configured per given periodicity.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present invention.

The transmission signal generating section 402 generates an uplink control signal related to transmission acknowledgement information and Channel State Information (CSI) based on, for example, the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on a radio resource based on the instruction from the control section 401, and outputs the uplink signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present invention.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

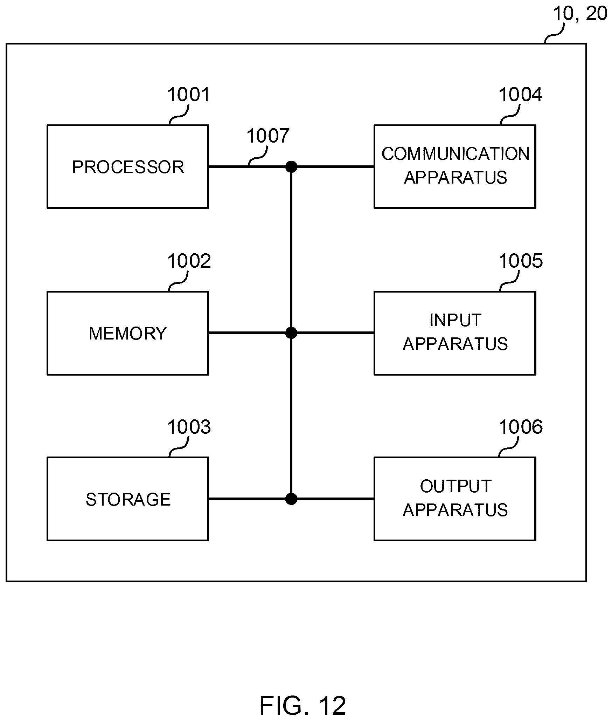

For example, the radio base station and the user terminal according to the one embodiment of the present invention may function as computers that perform processing of the radio communication method according to the present invention. Fig. 12 is a diagram illustrating one example of the hardware configurations of the radio base station and the user terminal according to the one embodiment of the present invention. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 12 or may be configured without including part of the apparatuses.

For example, Fig. 12 illustrates the only one processor 1001. However, there may be a plurality of processors. Furthermore, processing may be executed by one processor or processing may be executed by one or more processors concurrently, successively or by using another method. In addition, the processor 1001 may be implemented by one or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and is also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using buses that are different between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signaling). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used by each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time interval (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (Master Information Blocks (MIBs) and System Information Blocks (SIBs)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") may be made not only by explicit notification but also implicit notification (by, for example, not notifying this given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio techniques are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station is also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used. The base station is also referred to as a term such as a fixed station, a NodeB, an eNodeB (eNB), an access point, a transmission point, a reception point, a femtocell or a small cell in some cases.

The mobile station is also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between two or more elements, and can include that one or more intermediate elements exist between the two elements "connected" or "coupled" with each other. The elements may be coupled or connected physically, logically or by way of a combination of the physical and logical connections. For example, "connection" may be read as "access".

It can be understood that, when connected in this description, the two elements are "connected" or "coupled" with each other by using one or more electric wires, cables and/or printed electrical connection, and by using electromagnetic energy having wavelengths in radio frequency-domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an XOR.

The present invention has been described in detail above. However, it is obvious for a person skilled in the art that the present invention is not limited to the embodiment described in this description. The present invention can be carried out as modified and changed aspects without departing from the scope of the present invention defined based on the recitation of the claims. Accordingly, the disclosure of this description intends for exemplary explanation, and does not bring any restrictive meaning to the present invention.

## Claims

1. A terminal (20) comprising:
a control section (401) configured to determine a resource of an uplink shared channel, based on a transmission periodicity configured by a higher layer parameter and offset information indicated by downlink control information, wherein the offset information indicates a duration from a reference timing to a start timing of a resource of the uplink shared channel to which the transmission periodicity is applied, the reference timing being based on a notification timing of the downlink control information; and
a transmission section (203) configured to transmit the uplink shared channel.

2. The terminal (20) according to claim 1, wherein the control section (401) is configured to determine, based on the offset information, a start position of the resource of the uplink shared channel to which the transmission periodicity is applied.

3. The terminal (20) according to claim 1 or 2, wherein the control section (401) is configured to control repeat transmission of the uplink shared channel, to which the transmission periodicity is applied.

4. A radio communication method for a terminal (20) comprising:
determining a resource of an uplink shared channel, based on a transmission periodicity configured by a higher layer parameter and offset information indicated by downlink control information, wherein the offset information indicates a duration from a reference timing to a start timing of a resource of the uplink shared channel to which the transmission periodicity is applied, the reference timing being based on a notification timing of the downlink control information; and
transmitting the uplink shared channel.

5. A base station (10) comprising:
a reception section (103) configured to receive an uplink shared channel whose resource is determined based on a transmission periodicity configured by a higher layer parameter and offset information indicated by downlink control information,
wherein the offset information indicates a duration from a reference timing to a start timing of a resource of the uplink shared channel to which the transmission periodicity is applied, the reference timing being based on a notification timing of the downlink control information.

6. A system (1) comprising a terminal (20) according to any one of claims 1 to 3, and a base station (10) according to claim 5.

## Patentansprüche

1. Endgerät (20), umfassend:
einen Steuerabschnitt (401), der konfiguriert ist zum Bestimmen einer Ressource eines gemeinsam genutzten Aufwärtsverbindungskanals basierend auf einer Übertragungsperiodizität, die durch einen Parameter einer höheren Schicht konfiguriert ist, und einer Versatzinformation, die durch eine Abwärtsverbindungssteuerinformation angezeigt wird, wobei die Versatzinformation eine Dauer von einer Referenzzeit zu einer Startzeit einer Ressource des gemeinsam genutzten Aufwärtsverbindungskanals anzeigt, auf die die Übertragungsperiodizität angewendet wird, wobei die Referenzzeit auf einer Benachrichtigungszeit der Abwärtsverbindungssteuerinformation basiert; und
einen Übertragungsabschnitt (203), der konfiguriert ist zum Übertragen des gemeinsam genutzten Aufwärtsverbindungskanals.

2. Endgerät (20) nach Anspruch 1, wobei der Steuerabschnitt (401) konfiguriert ist zum Bestimmen einer Startposition der Ressource des gemeinsam genutzten Aufwärtsverbindungskanals, auf die die Übertragungsperiodizität angewendet wird, basierend auf der Versatzinformation.

3. Endgerät (20) nach Anspruch 1 oder 2, wobei der Steuerabschnitt (401) konfiguriert ist zum Steuern einer wiederholten Übertragung des gemeinsam genutzten Aufwärtsverbindungskanals, auf die die Übertragungsperiodizität angewendet wird.

4. Funkkommunikationsverfahren für ein Endgerät (20), umfassend:
Bestimmen einer Ressource eines gemeinsam genutzten Aufwärtsverbindungskanals basierend auf einer Übertragungsperiodizität, die durch einen Parameter einer höheren Schicht konfiguriert ist, und einer Versatzinformation, die durch eine Abwärtsverbindungssteuerinformation angezeigt wird, wobei die Versatzinformation eine Dauer von einer Referenzzeit zu einer Startzeit einer Ressource des gemeinsam genutzten Aufwärtsverbindungskanals anzeigt, auf die die Übertragungsperiodizität angewendet wird, wobei die Referenzzeit auf einer Benachrichtigungszeit der Abwärtsverbindungssteuerinformation basiert; und
Übertragen des gemeinsam genutzten Aufwärtsverbindungskanals.

5. Basisstation (10), umfassend:
einen Empfangsabschnitt (103), der konfiguriert ist zum Empfangen eines gemeinsam genutzten Aufwärtsverbindungskanals, dessen Ressource basierend auf einer Übertragungsperiodizität, die durch einen Parameter einer höheren Schicht konfiguriert ist, und einer Versatzinformation, die durch eine Abwärtsverbindungssteuerinformation angezeigt wird, bestimmt wird,
wobei die Versatzinformation eine Dauer von einer Referenzzeit zu einer Startzeit einer Ressource des gemeinsam genutzten Aufwärtsverbindungskanals anzeigt, auf die die Übertragungsperiodizität angewendet wird, wobei die Referenzzeit auf einer Benachrichtigungszeit der Abwärtsverbindungssteuerinformation basiert.

6. System (1), das ein Endgerät (20) nach einem der Ansprüche 1 bis 3 und eine Basisstation (10) nach Anspruch 5 umfasst.

## Revendications

1. Terminal (20) comprenant :
une section (401) de commande configurée pour déterminer une ressource d'un canal partagé de liaison montante, sur la base d'une périodicité de transmission configurée par un paramètre de couche supérieure et d'informations de décalage indiquées par des informations de commande de liaison descendante, dans lequel les informations de décalage indiquent une durée allant d'une synchronisation de référence à une synchronisation de début d'une ressource du canal partagé de liaison montante auquel la périodicité de transmission est appliquée, la synchronisation de référence étant basée sur une synchronisation de notification des informations de commande de liaison descendante ; et
une section (203) de transmission configurée pour transmettre le canal partagé de liaison montante.

2. Terminal (20) selon la revendication 1, dans lequel la section (401) de commande est configurée pour déterminer, sur la base des informations de décalage, une position de début de la ressource du canal partagé de liaison montante auquel la périodicité de transmission est appliquée.

3. Terminal (20) selon la revendication 1 ou la revendication 2, dans lequel la section (401) de commande est configurée pour commander une transmission répétée du canal partagé de liaison montante, auquel la périodicité de transmission est appliquée.

4. Procédé de radiocommunication pour un terminal (20), comprenant :
la détermination d'une ressource d'un canal partagé de liaison montante, sur la base d'une périodicité de transmission configurée par un paramètre de couche supérieure et d'informations de décalage indiquées par des informations de commande de liaison descendante, dans lequel les informations de décalage indiquent une durée allant d'une synchronisation de référence à une synchronisation de début d'une ressource du canal partagé de liaison montante auquel la périodicité de transmission est appliquée, la synchronisation de référence étant basée sur une synchronisation de notification des informations de commande de liaison descendante ; et
la transmission du canal partagé de liaison montante.

5. Station de base (10) comprenant :
une section (103) de réception configurée pour recevoir un canal partagé de liaison montante dont une ressource est déterminée sur la base d'une périodicité de transmission configurée par un paramètre de couche supérieure et d'informations de décalage indiquées par des informations de commande de liaison descendante,
dans lequel les informations de décalage indiquent une durée allant d'une synchronisation de référence à une synchronisation de début d'une ressource du canal partagé de liaison montante auquel la périodicité de transmission est appliquée, la synchronisation de référence étant basée sur une synchronisation de notification des informations de commande de liaison descendante.

6. Système (1) comprenant un terminal (20) selon l'une quelconque des revendications 1 à 3, et une station de base (10) selon la revendication 5.
